# EUROPEAN PATENT SPECIFICATION

(11) **EP 3 506 493 B1**
(45) Date of publication and mention of the grant of the patent: **04.11.2020**
(21) Application number: 17382902.9
(22) Date of filing: 26.12.2017
(51) Int. Cl.: H02S 40/00

(54) **STORAGE AND ASSEMBLY DEVICE AND METHOD FOR STORING AND ASSEMBLING SOLAR PANELS**
LAGER- UND MONTAGEVORRICHTUNG UND VERFAHREN ZUM LAGERN UND MONTIEREN VON SOLARPANEELEN
DISPOSITIF DE STOCKAGE ET D'ASSEMBLAGE ET PROCÉDÉ DE STOCKAGE ET D'ASSEMBLAGE DE PANNEAUX SOLAIRES

(43) Date of publication of application: 03.07.2019
(73) Proprietor: Ikerlan, S. Coop, 20500 Arrasate-Mondragon (ES)
(72) Inventor: REMÍREZ JAUREGUI, Adrián, 20500 Arrasate - Mondragón (ES); URIBETXEBARRIA BARRENA, Jone, 20500 Arrasate - Mondragón (ES); ZUBIZARRETA ARENAZA, Patxi Xabier, 20500 Arrasate - Mondragón (ES); DÍAZ OTXANDIANO, Iban, 20500 Arrasate - Mondragón (ES)
(74) Representative: ABG Intellectual Property Law, S.L.

(56) References cited:
- WO-A1-2014/209420
- US-A1- 2013 019 925
- US-A1- 2017 313 470

## Description

### Object of the Invention

The present invention is comprised in the field of processes for loading and installing solar or photovoltaic panels, particularly apparatus and/or devices for storing and assembling solar panels. More particularly, the invention comprises a single device for the loading, storage, transport and placement of solar panels. The present invention further comprises a method for placing solar panels at sites where they are installed. This device also allows the loading, storage, transport and placement of large solar panels that cannot be handled by operators.

### Background of the Invention

Today, once solar panels are pre-assembled, they are loaded directly into trailers to then transfer them to the site where they are assembled/installed. Once the panels are transferred to the installation site, for example a jib-type crane installed in the actual trailer in which the panels were transferred, is in charge of individually picking up each solar panel from the trailer and positioning it on the securing or tracking system of the installation site.

The step of factory loading the solar panels in trailers as well as the step of positioning or placing the panels on site requires a substantial amount of time and the intervention of a large number of trailers and cranes. Additionally, if solar panel stock is to be worked with, such solar panels can be stored once they are factory pre-assembled. However, up until now, an independent system in charge of storing the pre-assembled panels one by one has been required for the factory storing of said solar panels for their subsequent placement in trailers for being transferred.

In both factory solar panel loading and factory solar panel storage processes, these panels are placed (stored) one on top of another, such that it increases the risk of said solar panels experiencing damage during subsequent steps of handling and/or transporting solar panels, as well as in the step of positioning solar panels on site. Accordingly, these known processes in turn require an additional securing process that increases times.

Up until now, the processes carried out from the time the solar panels are factory loaded until they are positioned on site have the drawbacks of long times, the use of a number of apparatus and/or devices involved in the on-site loading, storage, transport and placement of solar panels, as well as a high risk of said panels experiencing damage and high logistics costs. Furthermore, these processes are further complicated when the solar panels are of a large size.

An example of a storing device for solar panels is known from patent publication US 2013/019925 A1, wherein a bottom solar panel is released through a displacement module that releases said solar panel laterally onto a drone that brings said solar panel to its final position.

For this reason, the present invention proposes new tooling for storing solar panels as well as an improved process for the on-site placement of said solar panels.

### Description of the Invention

The present invention proposes a solution to the preceding problems by means of a storage and assembly device for storing and assembling solar panels according to claim 1, and a method for the placement of solar panels according to claim 9. The dependent claims define preferred embodiments of the invention.

A first inventive aspect provides a storage and assembly device for storing and assembling solar panels comprising:
- a supporting structure with a containing space for storing a plurality of solar panels and said supporting structure located on a base arranged in the lower part in its operating position;
- one or more displacement modules, wherein each displacement module comprises one or more displaceable supports per solar panel to be stored for the support and displacement of the solar panel, wherein the one or more supports are displaceable from a first storage position to a second release position of the solar panel;
- an actuator for driving the displacement of the displaceable supports;
wherein when the displaceable supports are located in the first position, the displacement module or modules determine a position of the solar panels supported by them in a stacked arrangement, and
the release of the solar panels takes place through an opening in the base.

Relative terms referring to both position and orientation of the present device and its components, such as upper, lower, vertical, horizontal and the like, will be used throughout the description. One of the parts identified in the device is the base, and said base is mainly contained in one plane. When the device is in use, the base is always oriented parallel to the ground. The base is therefore a reference for the rest of the elements of the device, i.e., if one element is described as being vertically oriented, without referencing it to another element, it is because it is arranged perpendicular to the base.

In a preferred example of the invention, the base also extends along a main longitudinal direction, the direction in which displacement of the device occurs so as to deposit the solar panels. This longitudinal direction of the base is also a reference of the different components of the device with respect to the base.

Terms such as "in the operating mode" or "when the device is in the operating mode" will also be used throughout the description. The device of the invention is a structure which allows, among other functions, the storage and placement of solar panels, and as such, the solar panels are not part of the device. Nevertheless, the manner of storing the solar panels therein is to form a stack understood as the superposition of a plurality of solar panels, arranged parallel to one another and located one on top of another, forming a stack at different levels in height with respect to the base. The stack extends along a direction perpendicular to the main plane of any of the solar panels. Therefore when references such as the stacking direction when the device is in the operating mode are used, it must be understood as the displaceable supports being configured to establish a certain orientation of the solar panels and also a stacking direction perpendicular to the solar panels when the device has such solar panels.

The supporting structure of the present device will be understood as a container-type structure defining therein a containing space suitable for storing solar panels in a stacked manner. These solar or photovoltaic panels that can be stored in the present device to later be transferred and positioned in the solar farm, have previously been pre-assembled forming sets of pre-assembled panels. Throughout this document, solar panel will be understood as a set of previously pre-assembled solar panels that can in turn incorporate other factory assembled auxiliary elements. This set formed in these pre-assembly operations is generically identified as a solar panel. The installation of this set in the solar farm allows having pre-assembly operations already performed in the factory.

In a particular embodiment, the supporting structure comprises displaceable supports which are arranged such that in the operating mode, the panels or sets of panels are all stacked horizontally, parallel to the base.

The displaceable supports of the displacement modules individually support each solar panel such that these panels are supported on said displaceable supports and stacked inside the supporting structure forming different levels in height with enough space between them so that the panels of one level are not in contact with the panels of consecutive levels. The displacement of these displaceable supports causes the movement of the solar panels from a first storage position to a second release position of the solar panel. In other words, the first storage position is that position in which, in the operating mode, the solar panels are stored in a stacked manner, supported by the displaceable supports inside the supporting structure, whereas the second release position in the operating mode is that position in which the solar panels are arranged near the opening of the base of the supporting structure, no longer supported by the displaceable supports but rather in contact with or supported on the solar panel supports arranged at the installation site.

The movement of the displaceable supports to go from the first storage position to the second release position is caused by the action of the actuator that is in charge of driving said displacement movement of the displaceable supports.

The present configuration of the storage and assembly device for storing and assembling solar panels advantageously allows solar panels to be automatically factory loaded in the supporting structure once said panels are pre-assembled, even if they are of a large size. Furthermore, once the solar panels are automatically loaded in the device, they can remain stored therein for as long as necessary.

Furthermore, since the solar panels are stacked and supported by the displaceable supports inside the supporting structure, the device advantageously allows these panels to be factory stored like stock. As a result of this storage configuration, the solar panels are kept protected inside the supporting structure.

Additionally, the present storage and assembly device, is advantageously capable of positioning or placing the solar panels on the solar panel (securing or tracker) supports arranged in the solar farm, through the controlled lowering or releasing movement of said panels when they go from the first storage position to the second release position. The releasing movement of the solar panel can be understood as the lowering movement of the displacement supports in the supporting structure given that these are lowered in height, being moved close to the ground, i.e., the solar panels go from being supported by the displaceable supports of the displacement modules to being supported on the solar panel supports which are located on site.

In a particular embodiment, the displacement module comprises two conveyor belts:
- each of the two conveyor belts has a linear configuration;
- each of the two conveyor belts extends between two rotating wheels; and
wherein the two conveyor belts are arranged parallel and one on each side of the stack of solar panels when they are stored in the operating mode such that:
- in the first position, the displaceable supports for supporting a solar panel of both conveyer belts are arranged facing one another; and
- in the second position, the displaceable supports for supporting a solar panel of both conveyer belts are arranged in opposition, i.e., on the side of the conveyer belt opposite the stack.

In this particular embodiment, the displaceable supports are fixed along each of the two conveyor belts such that they are displaced due to the action of the actuator on the rotating wheels on which each of the conveyor belts is arranged. In the first storage position, all the displaceable supports are located parallel to and facing one another, whereas in the second release position at least the displaceable supports closest to the base go to being arranged on the side of the conveyer belt opposite the stack. In a preferred example, the movements of each conveyer belt are independent of, but coordinated with, one another as a result of the predefined actuation of the actuator such that the movement of the belts is integral, i.e., they move with the same displacements and at the same speeds.

In a more particular embodiment, the conveyor belts are arranged in a position perpendicular to the base for releasing the panels through the opening of the base to provide the displaceable supports with a movement perpendicular to the base during the release of a solar panel or set of solar panels.

The rotational movement of the rotating wheels causes linear displacement of the conveyer belt such that the displaceable supports are vertically displaced in two main directions, i.e., in the direction of moving closer to the ground and in the direction of moving away from the ground.

In another particular embodiment, the displacement module comprises two bar members arranged parallel and one on each side of the stack of solar panels when they are stored in the operating mode, each bar member comprising a first rotating bar member and a second rotating and axially displaceable bar member, said members being parallel to one another, such that there are displaceable supports distributed equidistantly with respect to one another along the first bar member, one displaceable support for each solar panel to be stored in the stack, and displaceable supports distributed equidistantly with respect to one another, and with the same separation distance as in the first bar member, along the second bar member, one displaceable support for each solar panel to be stored in the stack with the exception of the lowest one closest to the base; wherein
- in a first angular position of the first bar member, the displaceable supports of said first bar member are located in the first position, and by means of rotation, in a second angular position of the first bar member, the displaceable supports are located in the second position, and
- in a first angular position of the second bar member, the displaceable supports of said second bar member are located in the first position, and by means of rotation, in a second angular position of the second bar member, the displaceable supports are located in the second position.
   the rotations of the first bar member and the rotations of the second bar member being independent of one another.

The first bar member is arranged vertical to the base and configured for rotating about its own axis due to the actuation of the actuator, the axis of this first bar member being perpendicular to the base. The second bar member is also arranged vertical to the base and configured for rotating about its own axis like the first bar member, and this second bar member is in turn configured for being axially displaced. The movements of each bar member of a displacement module are independent of one another, and the movements of each displacement module can also be independent. However, the movements of each bar member and each displacement module are coordinated with one another in the entire device through the controlled actuation of the actuator.

Particularly, the second bar member can be understood as a telescopic bar that can rotate and be axially displaced about itself.

The rotation performed by the first bar member to go from the first angular position to the second angular position causes the solar panels in the operating mode to go from being supported by the displaceable supports arranged in both bar members to being supported only by the displaceable supports of the second bar member. The same occurs for the second bar member, i.e., when this second bar member rotates, going from a first angular position to a second angular position, it causes the solar panels in the operating mode to go from being supported by the displaceable supports arranged in both bar members to being supported only by the displaceable supports of the first bar member.

The fact that the second bar member has a plurality of displaceable supports equidistant from one another such that there is one displaceable support for each solar panel to be stored in the stack with the exception of the lowest one closest to the base, allows that when the first bar member rotates towards the second angular position, the solar panel or set of solar panels is no longer supported by the displaceable supports of both bar members and is positioned on the panel support installed on site. Advantageously, this bar member configuration allows, in the operating mode, for the solar panels to be positioned on the panel supports arranged at the installation site through a series of coordinated movements between the bar members of each displacement module.

In a more particular embodiment, the displaceable supports are arranged in each bar member in groups of two such that when the solar panels are stored in the operating mode (in the first storage position) the solar panel is supported between two displaceable supports for each bar member, i.e., there is one displaceable support below the solar panel and another one above it.

In another particular embodiment, the displacement module comprises two worm gears, arranged parallel and one on each side of the stack of solar panels when they are stored in the operating mode, each worm gear comprising:
- a threaded bolt extended along a certain length perpendicular to the base and a threaded bushing, the threaded bolt being screwed into the bushing such that the rotation of the bolt causes axial displacement of the bushing along the bolt;
- a plurality of displaceable supports distributed along the bushing and facing towards the stack of solar panels in the operating mode.

In this particular embodiment, the bolt comprises a threaded-type outer surface suitable for being screwed into the threaded-type inner surface of the bushing. By means of the action of the actuator, the bolt starts to rotate, screwing into the bushing and causing the axial displacement of the bushing itself along the bolt. Nevertheless, given that the displaceable supports are fixed along the bushing, these displaceable supports are displaced as a result of the axial displacement of this bushing.

The bolt of each worm gear comprises a certain length such that it is prolonged enough so as to allow the stacked solar panels farthest away from the base to be positioned on site.

In a more particular embodiment, the distance between the displacement modules located on both sides of the stack of solar panels stored in the operating mode is adjustable according to the width of the solar panels. Advantageously, it allows the distance between displaced modules to be adjusted depending on the needs of the solar panels.

In a particular embodiment, the device additionally comprises a transport structure for the displacement of the storage and assembly device, comprising a securing element fixing the storage and assembly device to the transport structure with the base being positioned parallel to and spaced from the ground.

Advantageously, the present device can be transferred inside the factory and from the factory to the solar farm. Furthermore, since the solar panels are stacked inside the supporting structure and individually supported by the displaceable supports, the transfer of the device is not detrimental for the state of the solar panels or set of solar panels. In other words, the panels are transferred in a simple manner from the factory where they were previously pre-assembled to the solar farm where they will be positioned as a result of the configuration of the present device.

In a more particular embodiment, the transport structure comprises horizontal displacement means for being displaced along the ground and vertical displacement means for moving the storage device closer to/farther from the ground.

The horizontal displacement means allow the device to be transferred inside the factory, between the factory and the site, and at said site during the step for positioning solar panels on solar panel supports.

A second inventive aspect provides a method for the placement of solar panels by means of a device according to the first inventive aspect, wherein said method comprises:
- loading the device with a plurality of panels stacked in the containing space and supported on the displaceable supports positioned in the first position; and
   in an iterative manner, carrying out the following steps:
   i. displacing the device in a longitudinal forward movement direction until situating the opening of the base, parallel to the ground, above a support for a solar panel previously fixed on its foundation and on which a solar panel will be installed;
   ii. generating a displacement of the displaceable supports of the displacement module until releasing the solar panel arranged in the lower part in the stack;
   as long as there are solar panels stored in the container and supports for a solar panel available.

Once the opening of the base of the device is positioned on site above the support for a solar panel in step i), the displaceable supports of the displacement modules are all supporting the solar panels stacked inside the supporting structure, which corresponds with the first storage position.

In step ii), the displaceable supports of the displacement modules are displaced, going from the first storage position to the second release position, which is when the solar panel is no longer supported by the displaceable support and is supported on the support for a solar panel installed on site.

Steps i) and ii) are repeated in an iterative manner until all the necessary solar panels have been positioned on their supports on site, or even until the supporting structure is completely empty.

In a preferred example, in step i) the device is displaced in a longitudinal direction corresponding with the main longitudinal direction of the base thereof. Nevertheless, the base can adopt more complex shapes and the longitudinal displacement direction will be that which allows moving forward between supports for solar panels on which the solar panels are installed.

The present method for the placement of solar panels by means of the device of the first inventive aspect advantageously allows said device as a whole to factory load and store inside the supporting structure the solar panel units or set of solar panels, to transport said solar panels securely both in the factory and at the installation site by transferring the device itself, and in turn it allows positioning each of the solar panels on the securing or tracking system (support for a solar panel) located at the installation site.

In a particular embodiment, step ii) of displacing the displaceable supports of the displacement module until releasing the solar panel arranged in the lower part in the stack is carried out by means of the actuator causing the rotation of the rotating wheels for the displacement of the displaceable supports along the belt where said supports are located.

In another particular embodiment, step ii) of displacing the displaceable supports of the displacement module until releasing the solar panel arranged in the lower part in the stack is carried out by means of the actuator causing the following sequence of movements, starting from an orientation of the bar members such that the displaceable supports are in the first angular position:
1) lowering the device, moving it closer to the ground, until the solar panel arranged in the lower part in the stack comes into contact with the support for a solar panel, no longer being supported on the corresponding displaceable supports;
2) rotating the first bar member to the second angular position;
3) lowering the second bar member according to its longitudinal direction a distance that is equivalent to the separation between two consecutive displaceable supports, lowering the stack of solar panels;
4) rotating the first bar member to the first angular position;
5) rotating the second bar member to the second angular position;
6) raising the second bar member according to its longitudinal direction a distance that is equivalent to the separation between two consecutive displaceable supports;
7) rotating the second bar member to the first angular position.

In a particular embodiment, step ii) of displacing the supports of the displacement module until releasing the solar panel arranged in the lower part in the stack is carried out by means of the actuator causing the rotation of the threaded bolt, lowering the bushing towards the ground until the solar panel arranged in the lower part in the stack is supported on the support and is no longer supported on the corresponding displaceable supports.

In a particular embodiment, the loading of the device with a plurality of panels stacked in the containing space is carried out according to the following steps:
- distributing the plurality of solar panels along a certain length; and
in an iterative manner, carrying out the following steps:
- displacing the device until situating the opening of the base above a solar panel previously distributed along a certain length;
- generating a displacement of the supports of the displacement module from a second position to a first position such that the solar panel located in the opening of the base is situated in the lower part of the stack in the containing space of the device, lifting all the solar panels of the stack;
as long as there are solar panels distributed along a certain length and enough space in the containing space for storing solar panels in the displaceable supports.

In a particular embodiment, the loading of the device with a plurality of panels stacked in the containing space for a device with an upper access opening to the stack is carried out in an iterative manner according to the following steps:
- providing a solar panel through the upper access to the stack until it is supported on the displaceable supports in the upper part of the stack;
- generating a displacement of the displaceable supports of the displacement module from a second position to a first position such that there are displaceable supports available for supporting a new solar panel;
as long as there are solar panels and enough space in the containing space for storing solar panels in the displaceable supports.

In a particular embodiment, the loading of the device with a plurality of panels stacked in the containing space for a device with a front access opening according to the longitudinal forward movement direction is carried out by inserting the solar panels until each solar panel is supported on the corresponding displaceable supports in the stack, preferably one at a time and in the order established by the stack.

The present method for the placement of solar panels by means of a single storage and assembly device advantageously optimizes the ratio of resources used and the work times for the loading, transfer and placement of solar panels. Use of a device like the one of the present invention has been found in practice to improve the ratio of resources used per megawatt when assembled.

### Description of the Drawings

The foregoing and other features and advantages of the invention will become clearer based on the following detailed description of a preferred embodiment, given solely by way of illustrative and non-limiting example, in reference to the attached drawings.
Figure 1 shows a storage and assembly device for storing and assembling solar panels in a solar farm according to a particular embodiment of the present invention.
Figure 2A shows a perspective view of a storage and assembly device for storing and assembling solar panels according to a particular embodiment of the present invention.
Figure 2B shows a lateral view of the storage and assembly device for storing and assembling solar panels of Figure 2A according to a particular embodiment of the present invention.
Figure 2C shows a bottom view of the storage and assembly device for storing and assembling panels of Figure 2A according to a particular embodiment of the present invention.
Figure 2D shows a front view of the storage and assembly device for storing and assembling solar panels of Figure 2A according to a particular embodiment of the present invention.
Figure 2E shows a perspective view of a displacement module of the device of Figure 2A according to a particular embodiment of the present invention.
Figure 2F shows a lateral view of the displacement module of Figure 2E according to a particular embodiment of the present invention.
Figure 3A shows a perspective view of a storage and assembly device for storing and assembling solar panels according to a particular embodiment of the present invention.
Figure 3B shows a perspective view of the displacement modules of the device of Figure 3A according to a particular embodiment of the present invention.
Figures 4A to 4I show perspective views of a storage and assembly device according to a particular embodiment of the present invention.
Figure 5A shows a perspective view of a storage and assembly device for storing and assembling solar panels according to a particular embodiment of the present invention.
Figure 5B shows a front view of the storage and assembly device for storing and assembling solar panels of Figure 5A according to a particular embodiment of the present invention.
Figure 5C shows a perspective view of a displacement module of the device of Figure 5A according to a particular embodiment of the present invention.

### Detailed Description of the Invention

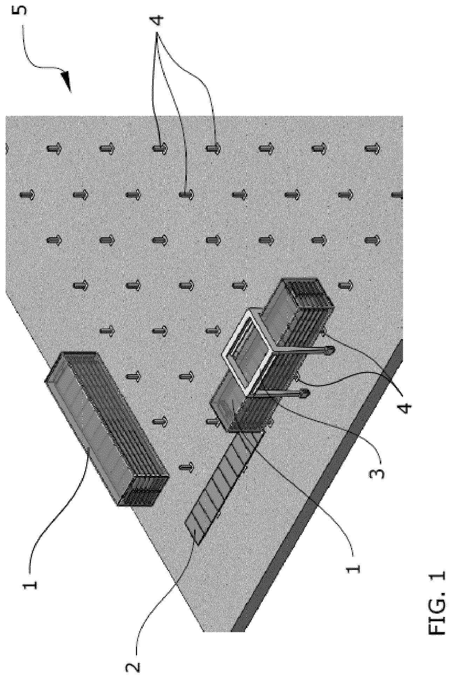

Figure 1 shows a solar farm (5) that has a plurality of solar panel supports (4) installed forming rows. These solar panel supports (4) are those on which each solar panel (2) or set of solar panels will be positioned by means of a storage and assembly device. This device stores solar panels (2) inside a supporting structure (1) comprised in said device. Said Figure 1 shows two supporting structures (1), one of which is located off to the side of the rows of the solar panel supports (4), and the other supporting structure (1) is arranged above a row of solar panel supports (4) on which solar panels (2) will be positioned; a set of solar panels (2) positioned on a plurality of solar panel supports (4) is further shown.

The device of Figure 1 shown to be arranged above a row of solar panel supports (4) further comprises a transport structure (3) which allows said supporting structure (1) to be displaced over the ground of the solar farm (5). In this particular example, the transport structure (3) is a gantry-type crane, i.e., it is formed by four posts parallel to one another and attached through a frame at one of the ends thereof, whereas each of the other ends of each post is attached to a wheel. These four wheels allow the sliding of the transport structure (3), and accordingly of the supporting structure (1) itself of the storage and assembly device. In another particular example (not shown in the drawing), the transport structure (3) is a trailer.

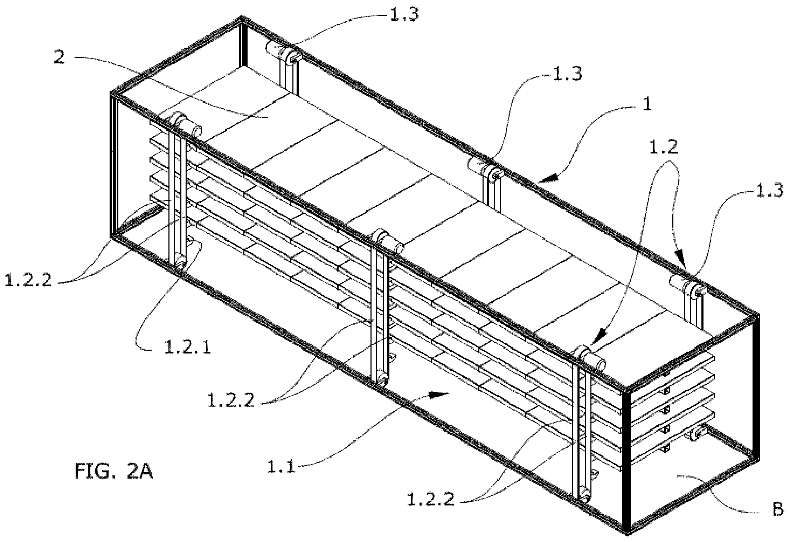

The storage and assembly device shown in Figure 1, as well as the storage and assembly device shown in Figures 2A-5C, is used to carry out the process of placing the solar panels (2) in a solar farm (5), which is described below.

The method for the placement or positioning of solar panels (2) on solar panel supports (4) in a solar farm (5) comprises:
loading the storage and assembly device with a plurality of panels (2) stacked in the containing space (1.1) and supported by displaceable supports (1.2.1) arranged in a first position (a); and
   in an iterative manner, carrying out the following steps:
   i. displacing the device in a longitudinal forward movement direction in the solar farm (5) until situating the opening of the base (B) of the supporting structure (1), parallel to the ground, above one or several solar panel supports (4) previously fixed on their foundation and on which a solar panel (2) will be installed;
   ii. actuating the actuator (1.3), generating a displacement of the supports (1.2.1) of the displacement module (1.2) until releasing the solar panel (2) or set of solar panels (2) arranged in the lower part in the stack in the
containing space (1.1) of the supporting structure (1); as long as there are solar panels (2) stored in the containing space (1.1) and supports for a solar panel (2) available.

Figures 2A to 5C show in detail a storage and assembly device for storing and assembling solar panels (2) comprising:
- a supporting structure (1) with a containing space (1.1) for storing a plurality of solar panels (2) and said supporting structure (1) located on a base (B) arranged in the lower part in its operating position;
- one or more displacement modules (1.2), wherein each displacement module (1.2) comprises one or more displaceable supports (1.2.1) per solar panel (2) to be stored for the support and displacement of the solar panel (2), wherein the one or more supports (1.2.1) are displaceable from a first storage position (a) to a second release position (b) of the solar panel (2);
- an actuator (1.3) for driving the displacement of the displaceable supports (1.2.1);
wherein when the displaceable supports (1.2.1) are located in the first position (a), the displacement module or modules (1.2) determine a position of the solar panels (2) supported by them in a stacked arrangement, and
the release of the solar panels (2) takes place through an opening in the base (B).

Said Figures 2A to 5C show storage devices with several examples of displacement modules (1.2). Each of the embodiments of the present storage and assembly device for storing and assembling solar panels (2) is described below in detail.

### Example 1

Figures 2A to 2F show a first particular example of a storage and assembly device for storing and assembling solar panels (2) in the operating mode according to the present invention. In this first example, the device comprises a supporting structure (1) defining a space inside said container (1.1) in which a plurality of solar panels (2) are stored. This storage and assembly device further comprises a plurality of displacement modules (1.2), particularly three displacement modules (1.2) as shown in Figure 2A. In this first example, as shown in Figure 2A, each displacement module (1.2) has two conveyor belts (1.2.2), each of these belts (1.2.2.) being arranged parallel and one on each side of the stack of solar panels (2). Each of the two conveyor belts (1.2.2) extends between two rotating wheels (1.2.2.1), one of which is fixed in the lower part or base (B) of the supporting structure (1) and the other one is fixed in the upper part of said supporting structure (1). Figure 2A furthermore shows how the device comprises one actuator (1.3) for each conveyer belt (1.2.2) of each displacement module (1.2). These actuators (1.3) are in charge of actuating the rotational movement of each of the rotating wheels (1.2.2.1) in a coordinated manner. Said Figure 2A furthermore shows how the solar panels (2) comprise a profile (2.1) in their lower part which is where each solar panel (2) is supported on the solar panel supports (4) of the solar farm (5) (as shown in Figure 1).

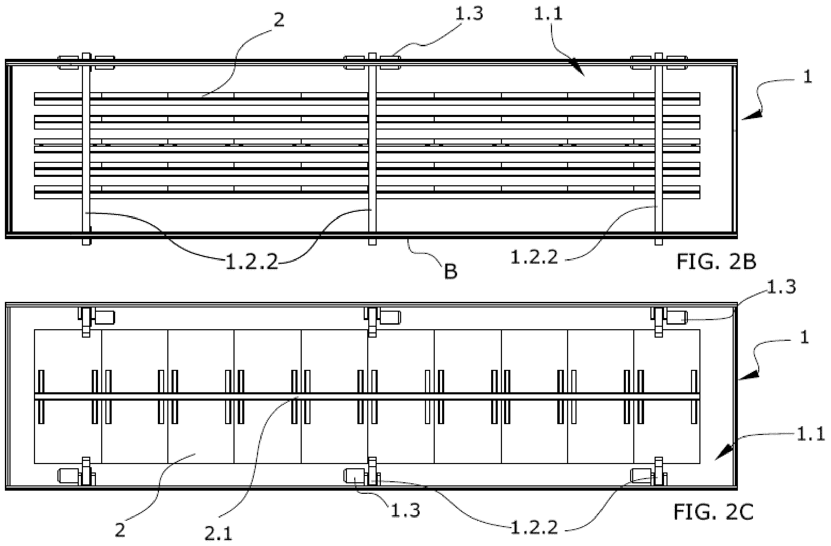

Figure 2B shows a lateral view of the device of Figure 2A in which it can be seen how the supporting structure (1) has a plurality of solar panels (2) stored therein, forming a stack of a total of five levels. The solar panels (2) stacked horizontally and parallel between levels. Three of the conveyor belts (1.2.2) of each displacement module (1.2) arranged perpendicular to the base (B) of the supporting structure (1) can furthermore be seen in said Figure 2B.

Figure 2C shows a bottom view of the device of Figure 2A in which it can be seen how the base of the supporting structure (1) comprises an opening that allows seeing in detail the lower row of solar panels stored inside this supporting structure (1). Furthermore, it shows how the solar panels (2) have a profile (2.1) fixed in their lower part which, in addition to serving as a support for positioning the solar panels (2) on the solar panel supports (4), also serve as an attachment profile for the attachment of a plurality of solar panels (2) all arranged in the same level in the stack.

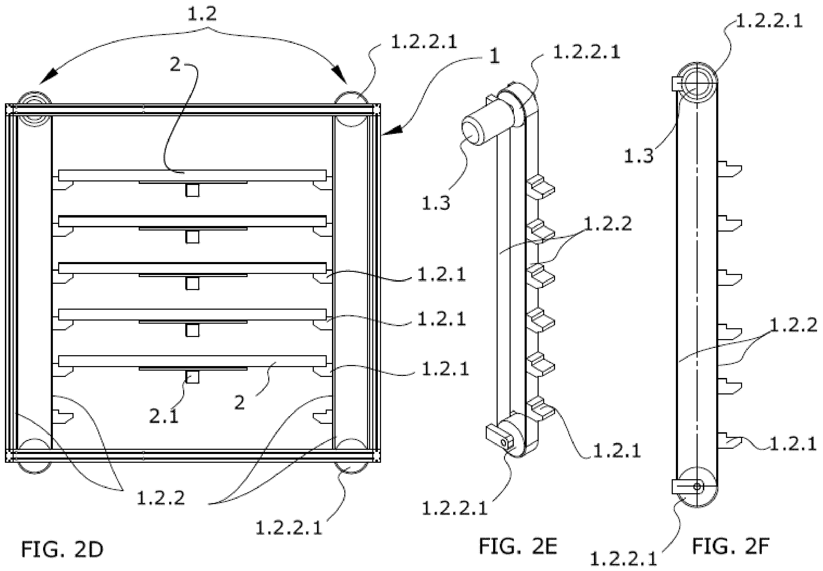

Figure 2D shows a front view of the device of Figure 2A in which a storage module (1.2) comprising two conveyor belts (1.2.2) each arranged on one side of the stack when the supporting structure (1) stores solar panels (2) in the operating mode can particularly be seen. It can furthermore be seen how the conveyer belt (1.2.2) has a linear configuration extending between two rotating wheels (1.2.2.1). A plurality of displaceable supports (1.2.1) fixed to both conveyor belts (1.2.2) can furthermore be seen in said Figure 2D, some of said displaceable supports (1.2.1) supporting the solar panels (2) at two of their ends. Figures 2E and 2F show in detail a conveyer belt (1.2.2) arranged between two rotating wheels (1.2.2.1) such that a section of said conveyer belt (1.2.2) has a plurality of displaceable supports (1.2.1) fixed thereto. These displaceable supports (1.2.1) maintain a constant distance with respect to one another (as seen in detail in Figure 2F). Figure 2E shows an actuator (1.3) connected to the upper rotating wheel (1.2.2.1) of the conveyor belt (1.2.2) for actuating the displacement thereof through the rotation of the rotating wheels (1.2.2.1).

Figure 2D also shows how the corresponding displaceable supports (1.2.1) are facing one another without supporting a solar panel (2) at the level closest to the base (B) of the supporting structure (1).

With respect to the method for the placement of solar panels (2) by means of the device which is shown in Figures 2A to 2F, in step ii), when the actuator (1.3) is actuated, rotation of the upper rotating wheels (1.2.2.1) of each of the displacement modules (1.2) begins, followed by the sliding of the conveyor belts (1.2.2) around the upper and lower rotating wheels (1.2.2.1), thereby generating the vertical displacement of the displacement supports (1.2.1). In step ii), the displacement movement of the displaceable supports (1.2.1) is a coordinated movement between both conveyor belts (1.2.2) of each displacement module (1.2) effected by the actuators (1.3) so that the solar panel (2) or the set of solar panels in the lower part of the stack is no longer supported at the ends thereof by the displaceable supports (1.2.1) at the same time.

### Example 2

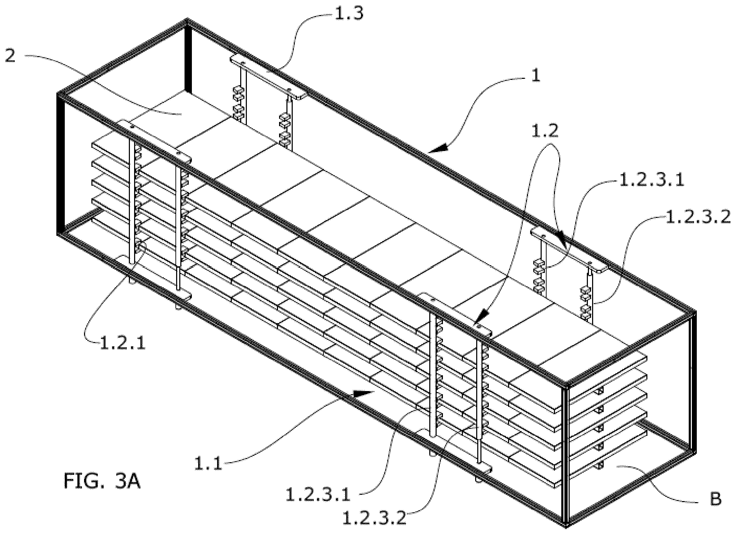

Figures 3A to 4I show a second particular example of a storage and assembly device for storing and assembling solar panels (2) in the operating mode according to the present invention. In this second example, the device comprises a supporting structure (1) defining a space therein in which a plurality of solar panels (2) are stored. This storage and assembly device further comprises a plurality of displacement modules (1.2), particularly two displacement modules (1.2), as shown in Figure 3A.

Said Figure 3A furthermore shows how the solar panels (2) comprise a profile (2.1) in their lower part which is where each solar panel (2) is supported on the solar panel supports (4) of the solar farm (5) (as shown in Figure 1).

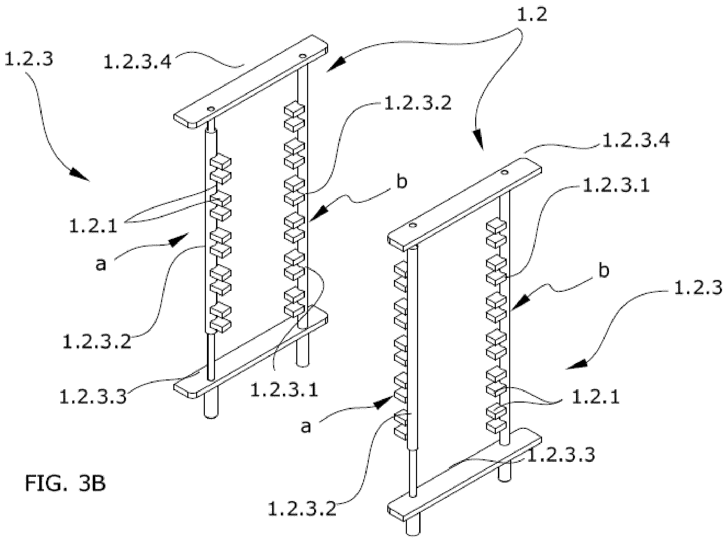

Figure 3B shows a perspective view of a displacement module (1.2) of the storage and assembly device which is shown in Figure 3A. It can particularly be seen how this displacement module (1.2) comprises two bar members (1.2.3). In this second example, each displacement module (1.2) has two bar members (1.2.3), each bar member (1.2.3) being arranged one on each side of the stack of solar panels (2) (as shown in Figure 3A). Each bar member (1.2.3) comprises a first bar member (1.2.3.1) and a second bar member (1.2.3.2), said members (1.2.3.1, 1.2.3.2) being parallel to one another. Each bar member (1.2.3) comprises a lower support base (1.2.3.3) and an upper support base (1.2.3.4) attaching the first bar member (1.2.3.1) and second bar member (1.2.3.2) to the supporting structure (1) of the storage and assembly device. In other words, the lower support base (1.2.3.3) of the bar member (1.2.3) is located close to the base (B), and the upper support base (1.2.3.4) the other in the upper part of the supporting structure (1) (as shown in Figure 3A) .

The first bar member (1.2.3.1) can rotate about itself, whereas the second bar member (1.2.3.2) can rotate and be axially displaced, particularly be displaced perpendicular to the base (B). Each bar member (1.2.3) comprises an actuator (1.3) (not shown in the drawings) in charge of actuating the movements of each bar member (1.2.3) and accordingly of each first and second bar member (1.2.3.1, 1.2.3.2).

Figure 3B furthermore shows how each bar member (1.2.3) comprises a plurality of displaceable supports (1.2.1) distributed equidistantly with respect to one another along the first bar member (1.2.3.1) and the second bar member (1.2.3), maintaining the same distance from one another in both bar members. The configuration of the displaceable supports (1.2.1) is such that for the first bar member (1.2.3.1), there is one displaceable support (1.2.1) for each solar panel (2) to be stored in the stack, whereas for the second bar member (1.2.3.2), there is one displaceable support (1.2.1) for each solar panel (2) to be stored in the stack with the exception of the lowest one closest to the base (B) (as shown in Figure 3A).

In this second example, the displacement module (1.2) defines two angular positions with respect to the bar members (1.2.3), that is, a first angular position in which the displaceable supports (1.2.1) of the first bar member (1.2.3.1) and second bar member (1.2.3.2) are located in the first position (a), i.e., supporting the solar panels (2); and a second angular position in which the displaceable supports (1.2.1) of the first bar member (1.2.3.1) and second bar member (1.2.3.2) are located in the second position (b). In other words, by means of the rotation actuated by an actuator (1.3), the first bar member (1.2.3.1) and second bar member (1.2.3.2) rotate from a first angular position to a second angular position, and vice versa; each bar member (1.2.3.1, 1.2.3.2) of the device can go from a first position (a) to a second position (b), and vice versa. The rotational movements of each bar member (1.2.3.1, 1.2.3.2) are independent of one another but coordinated such that they define a sequence of rotations for positioning each solar panel (2) in the solar farm (5).

Figure 3B furthermore shows how the displaceable supports (1.2.1) of each first bar member (1.2.3.1) and second bar member (1.2.3.2) are in groups of two, such that when the device is in its first storage position (a) (as shown in Figure 3A), the solar panels (2) are supported between two displaceable supports (1.2.1) at each end where they are supported.

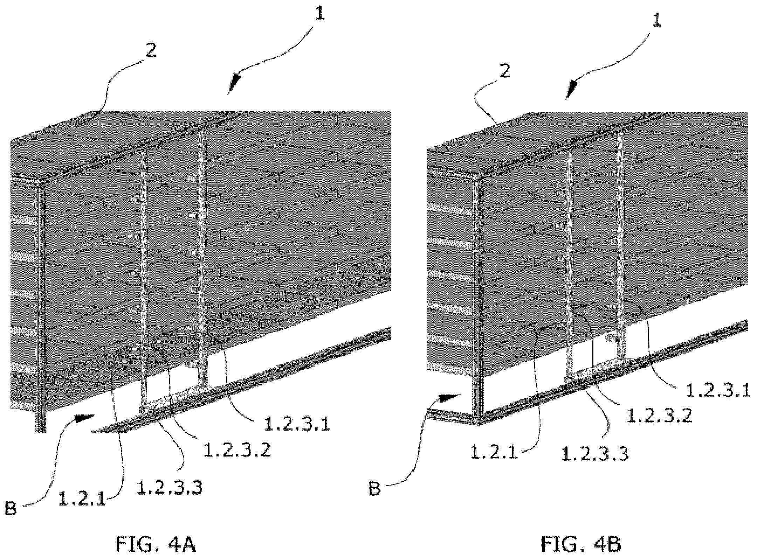

With respect to the method for the placement of solar panels (2) by means of the device which is shown in Figures 3A to 3C, in step ii), when the actuator (1.3) is actuated, a sequence of movements in the displacement module (1.2) begins according to this second example, such that the bar members (1.2.3) start from an orientation such that the displaceable supports (1.2.1) are located in the first position (a). This sequence of movements performed by a bar member (1.2.3) of the storage and assembly device according to the second example is shown in detail in Figures 4A to 4I.

Figure 4A shows the initial position from which the bar member (1.2.3) starts before the sequence of movements to place solar panels (2) in the solar farm (5) begins. In this initial position, the first bar member (1.2.3.1) is arranged such that the displaceable supports (1.2.1) attached to it are oriented towards the inside of the supporting structure (1), i.e., supporting the solar panels in a first position (a). The second bar member (1.2.3.2) is arranged such that the displaceable supports (1.2.1) attached to it are oriented towards the inside of the supporting structure (1), i.e., supporting the solar panels in a first position (a), such that the solar panel in the lower part closest to the base (B) would not be supported given that there would not be any displaceable supports (1.2.1) to that end. Said Figure 4A only shows a bar member (1.2.3) of the displacement module (1.2); however, the uppermost position described for the bar member (1.2.3) shown would be the same as the position the other bar member (1.2.3) (not shown in the drawing) would have.

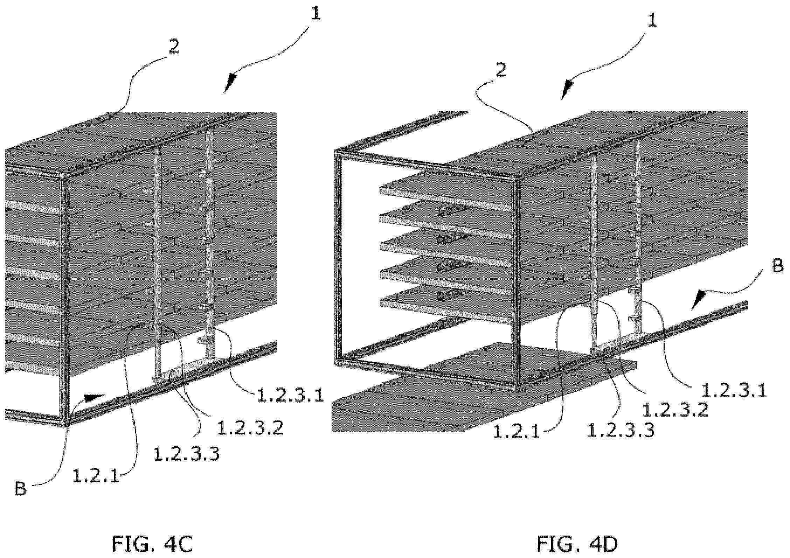

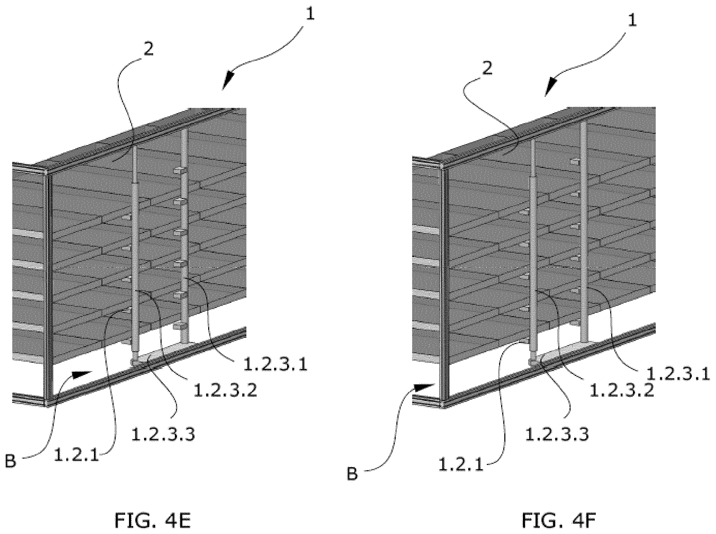

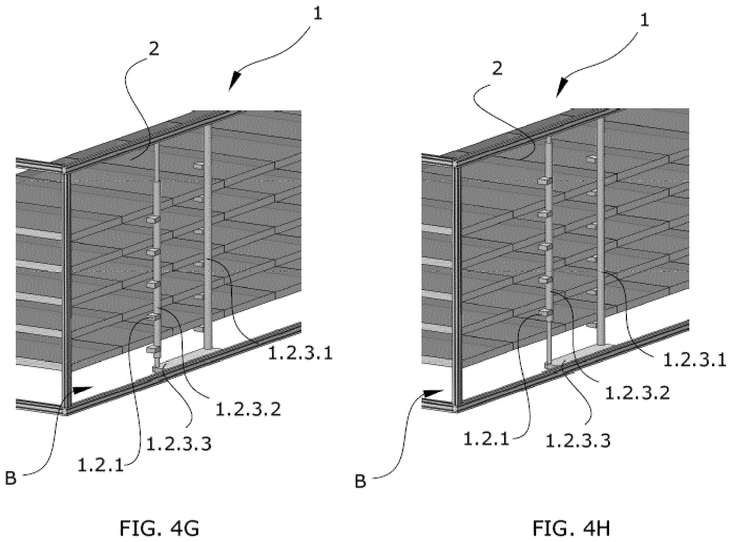

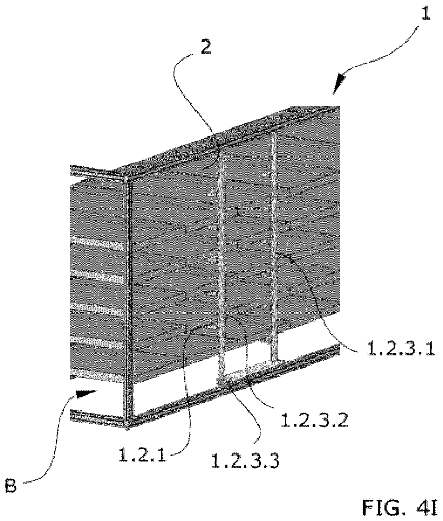

Figures 4B to 4I show the following sequence of movements of the bar member (1.2.3) shown in Figure 4A:
1) lowering the device as shown in Figure 4B, moving it closer to the ground, until the solar panel (2) arranged in the lower part in the stack comes into contact with the solar panel support (4), no longer being supported on the corresponding displaceable supports (1.2.1) (this drawing does not show how the solar panel (2) is supported on the solar panel support);
2) rotating the first bar member (1.2.3.1) to the second angular position (b) as shown in Figure 4C, such that the displaceable supports (1.2.1) fixed to said first bar member (1.2.3.1) no longer support the solar panels (2) of the stack;
   Once the first stack of solar panels or set of solar panels is positioned on its solar panel supports (4) as shown in Figure 4D, the device is displaced in a forward movement direction until it is positioned above the solar panel supports (4) in which the following stack of solar panels (2) stored in the supporting structure (1) will be positioned.
3) lowering the second bar member (1.2.3.2), according to its longitudinal direction in a movement perpendicular to the base (B) in the direction of approaching the base (B), a distance that is equivalent to the separation between two consecutive displaceable supports (1.2.1), lowering the stack of solar panels (2), as shown in Figure 4E;
4) rotating the first bar member (1.2.3.1) to the first angular position (a) as shown in Figure 4F, such that the displaceable supports (1.2.1) fixed to said first bar member (1.2.3.1) are oriented towards the inside of the supporting structure (1) and supporting the solar panels (2) of the stack;
5) rotating the second bar member (1.2.3.2) to the second angular position (b), as seen in Figure 4G, such that the displaceable supports (1.2.1) fixed to said second bar member (1.2.3.2) no longer support the solar panels (2) of the stack;
6) raising the second bar member (1.2.3.2) according to its longitudinal direction perpendicular to the base (B) in the direction of moving away from the base (B), a distance that is equivalent to the separation between two consecutive displaceable supports (1.2.1), as shown in Figure 4H;
7) rotating the second bar member (1.2.3.2) to the first angular position (a), as shown in Figure 4I, such that the displaceable supports (1.2.1) fixed to said second bar member (1.2.3.2) are oriented towards the inside of the supporting structure (1) and supporting the solar panels (2) of the stack.

Step 3 of the preceding sequence is understood as the step in which the stack of solar panels (2) is lowered towards the opening of the base (B) of the device once the lower stack of solar panels (2) has been previously positioned.

Once step 7 of the preceding sequence of movements has been reached, the device is ready to continue positioning the solar panels (2) stacked therein in a sequential manner, i.e., repeating steps 1 to 7 until desired or until all the solar panels (2) that were previously stored in the supporting structure (1) have been positioned.

### Example 3

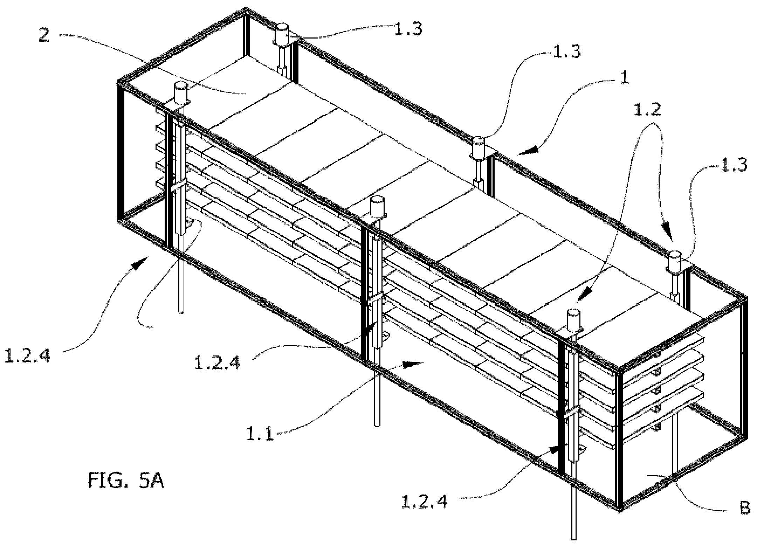

Figures 5A to 5C show a third particular example of a storage and assembly device for storing and assembling solar panels (2) in the operating mode according to the present invention. In this third example, the device comprises a supporting structure (1) defining a space therein in which a plurality of solar panels (2) are stored. This storage and assembly device further comprises a plurality of displacement modules (1.2), particularly three displacement modules (1.2) as shown in Figure 5A. In this third example, each displacement module (1.2) has two worm gears (1.2.4), arranged parallel and one on each side of the stack of solar panels (2). Each worm gear (1.2.4) comprises a threaded bolt (1.2.4.1) arranged perpendicular to the base (B) and a threaded bushing (1.2.4.2) around the bolt (1.2.4.1). The bolt (1.2.4.1) is screwed into the bushing (1.2.4.2) such that the rotation of the bolt (1.2.4.1) causes axial displacement of the bushing (1.2.4.2) along the bolt (1.2.4.1). Figure 5A furthermore shows how the device comprises one actuator (1.3) for each worm gear (1.2.4) of each displacement module (1.2). These actuators (1.3) are in charge of actuating the movement of screwing in each worm gear (1.2.4) in a coordinated manner with respect to one another. Said Figure 5A furthermore shows how the solar panels (2) comprise a profile (2.1) in their lower part, which is where each solar panel (2) is supported on the solar panel supports (4) of the solar farm (5) (as shown in Figure 1). This profile (2.1) is arranged along an entire set of solar panels (2).

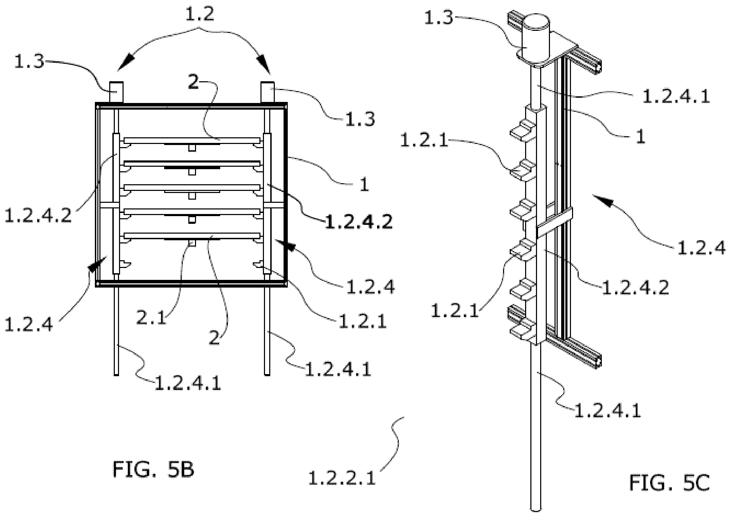

Figure 5B shows a front view of the device of Figure 5A in which there can particularly be seen a storage module (1.2) comprising two worm gears (1.2.4), each arranged on one side of the stack when the supporting structure (1) stores solar panels (2) in the operating mode. A plurality of displaceable supports (1.2.1) fixed to the bushings (1.2.4.2) of both worm gears (1.2.4) can furthermore be seen in said Figure 5B, some of such displaceable supports (1.2.1) supporting the solar panels (2) at two of their ends. Figure 5B also shows how the corresponding displaceable supports (1.2.1) are facing one another without supporting a solar panel (2) in the level closest to the base (B) of the supporting structure (1).

Figure 5C shows in detail a worm gear (1.2.4) comprising a bolt (1.2.4.1) and a threaded bushing (1.2.4.2) around the bolt (1.2.4.1). A plurality of displaceable supports (1.2.1) fixed to the bushing (1.2.4.2) can be seen in more detail. These displaceable supports (1.2.1) maintain a constant distance from one another. Figure 5C shows an actuator (1.3) connected to the worm gear (1.2.4) to actuate the screwing in thereof, thereby axially displacing the bushing (1.2.4.2) on the bolt (1.2.4.1).

With respect to the method for the placement of solar panels (2) by means of the device which is shown in Figures 5A to 5C, in step ii), when the actuator (1.3) is actuated, rotation of the bolt (1.2.4.1) of each of the displacement modules (1.2) begins, followed by axial sliding of the bushing (1.2.4.2) on said bolt (1.2.4.1), thereby generating the vertical displacement of the displacement supports (1.2.1). In said step ii), the displacement movement of the displaceable supports (1.2.1) is a coordinated movement between both worm gears (1.2.4) of each displacement module (1.2) effected by the actuators (1.3) so that the solar panel (2) in the lower part of the stack is no longer supported at its ends by the displaceable supports (1.2.1) at the same time.

The present storage and assembly device described in any of the drawings is, advantageously, a single device capable of loading sets of solar panels therein for storing, transporting and placing them in solar farms.

## Claims

1. A storage and assembly device for storing and assembling solar panels (2) comprising:
- a supporting structure (1) with a containing space (1.1) for storing a plurality of solar panels (2) and said supporting structure (1) located on a base (B) arranged in the lower part in its operating position; **characterized in that** it further comprises:
- one or more displacement modules (1.2), wherein each displacement module (1.2) comprises one or more displaceable supports (1.2.1) per solar panel (2) to be stored for the support and displacement of the solar panel (2), wherein the one or more supports (1.2.1) are displaceable from a first storage position (a) to a second release position (b) of the solar panel (2);
- an actuator (1.3) for driving the displacement of the displaceable supports (1.2.1);
wherein when the displaceable supports (1.2.1) are located in the first position (a), the displacement module or modules (1.2) determine a position of the solar panels (2) supported by them in a stacked arrangement, and
the release of the solar panels (2) takes place through an opening in the base (B).

2. The device according to claim 1, wherein the displacement module (1.2) comprises two conveyor belts (1.2.2):
- each of the two conveyor belts (1.2.2) has a linear configuration;
- each of the two conveyor belts (1.2.2) extends between two rotating wheels (1.2.2.1); and
wherein the two conveyor belts (1.2.2) are arranged parallel and one on each side of the stack of solar panels (2) when they are stored in the operating mode such that:
- in the first position (a), the displaceable supports (1.2.1) for supporting a solar panel (2) of both conveyer belts (1.2.2) are arranged facing one another; and
- in the second position (b), the displaceable supports (1.2.1) for supporting a solar panel (2) of both conveyer belts (1.2.2) are arranged in opposition, i.e., on the side of the conveyer belt (1.2.2) opposite the stack.

3. The device according to claim 2, wherein the conveyor belts (1.2.2) are arranged in a position perpendicular to the base (B) for releasing the panels through the opening of the base (B) to provide the displaceable supports (1.2.1) with a movement perpendicular to the base (B) during the release of a solar panel (2).

4. The device according to claim 1, wherein the displacement module (1.2) comprises two bar members (1.2.3), arranged parallel and one on each side of the stack of solar panels (2) when they are stored in the operating mode, each bar member (1.2.3) comprising a first rotating bar member (1.2.3.1) and a second rotating and axially displaceable bar member (1.2.3.2), said members (1.2.3.1, 1.2.3.2) being parallel to one another, such that there are displaceable supports (1.2.1) distributed equidistantly with respect to one another along the first bar member (1.2.3.1), one displaceable support (1.2.1) for each solar panel (2) to be stored in the stack, and displaceable supports (1.2.1) distributed equidistantly with respect to one another, and with the same separation distance as in the first bar member (1.2.3), along the second bar member (1.2.3), one displaceable support (1.2.1) for each solar panel (2) to be stored in the stack with the exception of the lowest one closest to the base (B);
wherein
- in a first angular position of the first bar member (1.2.3.1), the displaceable supports (1.2.1) of said first bar member (1.2.3.1) are located in the first position (a), and by means of rotation, in a second angular position of the first bar member (1.2.3.1), the displaceable supports (1.2.1) are located in the second position (b), and
- in a first angular position of the second bar member (1.2.3.2), the displaceable supports (1.2.1) of said second bar member (1.2.3.2) are located in the first position (a), and by means of rotation, in a second angular position of the second bar member (1.2.3.2), the displaceable supports (1.2.1) are located in the second position (b),
the rotations of the first bar member (1.2.3.1) and the rotations of the second bar member (1.2.3.2) being independent of one another.

5. The device according to claim 1, wherein the displacement module (1.2) comprises two worm gears (1.2.4), arranged parallel and one on each side of the stack of solar panels (2) when they are stored in the operating mode, each worm gear (1.2.4) comprising:
- a threaded bolt (1.2.4.1) extended along a certain length perpendicular to the base (B) and a threaded bushing (1.2.4.2), the threaded bolt (1.2.4.1) being screwed into the bushing (1.2.4.2) such that the rotation of the bolt (1.2.4.1) causes axial displacement of the bushing along the bolt (1.2.4.1);
- a plurality of displaceable supports (1.2.1) distributed along the bushing (1.2.4.2) and facing towards the stack of solar panels (2) in the operating mode.

6. The device according to any of the preceding claims, wherein the distance between the displacement modules (1.2) located on both sides of the stack of solar panels (2) stored in the operating mode is adjustable according to the width of the solar panels (2).

7. The device according to any of the preceding claims, additionally comprising a transport structure (3) for the displacement of the storage and assembly device, comprising a securing element fixing the storage and assembly device to the transport structure (3) with the base (3) being positioned parallel to and spaced from the ground.

8. The device according to the preceding claim, wherein the transport structure (3) comprises horizontal displacement means (3.1) for being displaced along the ground; and vertical displacement means (3.2) for moving the storage and assembly device closer to/farther from the ground.

9. A method for the placement of solar panels (2) by means of a device according to any of the preceding claims, wherein said method comprises:
- loading the device with a plurality of panels (2) stacked in the containing space (1.1) and supported on the displaceable supports (1.2.1) positioned in the first position (a); and
in an iterative manner, carrying out the following steps:
i. displacing the device in a longitudinal forward movement direction until situating the opening of the base (B), parallel to the ground, above a support for a solar panel (2) previously fixed on its foundation and on which a solar panel (2) will be installed;
ii. generating a displacement of the displaceable supports (1.2.1) of the displacement module (1.2) until releasing the solar panel (2) arranged in the lower part in the stack;
as long as there are solar panels (2) stored in the container (1.1) and supports for a solar panel (2) available.

10. The method according to claim 9 by means of a device according to any of claims 1 to 3, wherein step ii) of displacing the supports (1.2.1) of the displacement module (1.2) until releasing the solar panel (2) arranged in the lower part in the stack is carried out by means of the actuator (1.3) causing the rotation of the rotating wheels (1.2.2.1) for the displacement of the displaceable supports (1.2.1) along the belt where said supports (1.2.1) are located.

11. The method according to claim 9 by means of a device according to claim 4, wherein step ii) of displacing the displaceable supports (1.2.1) of the displacement module (1.2) until releasing the solar panel (2) arranged in the lower part in the stack is carried out by means of the actuator (1.3) causing the following sequence of movements, starting from an orientation of the bar members (1.2.3) such that the displaceable supports (1.2.1) are in the first angular position (a) :
1) lowering the device, moving it closer to the ground, until the solar panel (2) arranged in the lower part in the stack comes into contact with the solar panel support, no longer being supported on the corresponding displaceable supports (1.2.1);
2) rotating the first bar member (1.2.3.1) to the second angular position (b);
3) lowering the second bar member (1.2.3.2) according to its longitudinal direction a distance that is equivalent to the separation between two consecutive displaceable supports (1.2.1), lowering the stack of solar panels (2);
4) rotating the first bar member (1.2.3.1) to the first angular position (a);
5) rotating the second bar member (1.2.3.2) to the second angular position (b);
6) raising the second bar member (1.2.3.2) according to its longitudinal direction a distance that is equivalent to the separation between two consecutive displaceable supports (1.2.1);
7) rotating the second bar member (1.2.3.2) to the first angular position (a).

12. The method according to claim 9 by means of a device according to claim 5, wherein step ii) of displacing the supports (1.2.1) of the displacement module (1.2) until releasing the solar panel (2) arranged in the lower part in the stack is carried out by means of the actuator (1.3) causing the rotation of the threaded bolt (1.2.4.1) lowering the bushing (1.2.4.2) towards the ground until the solar panel (2) arranged in the lower part in the stack is supported on the support and is no longer supported on the corresponding displaceable supports (1.2.1).

13. The method according to claim 9, wherein the loading of the device with a plurality of panels (2) stacked in the containing space (1.1) is carried out according to the following steps:
- distributing the plurality of solar panels (2) along a certain length; and
in an iterative manner, carrying out the following steps:
- displacing the device until situating the opening of the base (B) above a solar panel (2) previously distributed along a certain length;
- generating a displacement of the supports (1.2.1) of the displacement module (1.2) from a second position (b) to a first position (a) such that the solar panel (2) located in the opening of the base (B) is situated in the lower part of the stack in the containing space (1.1) of the device lifting all the solar panels (2) of the stack;
as long as there are solar panels (2) distributed along a certain length and enough space in the containing space (1.1) for storing solar panels (2) in the displaceable supports (1.2.1) .

14. The method according to claim 9, wherein the loading of the device with a plurality of panels (2) stacked in the containing space (1.1) for a device with an upper access opening to the stack is carried out in an iterative manner according to the following steps:
- providing a solar panel (2) through the upper access to the stack until it is supported on the displaceable supports (1.2.1) in the upper part of the stack;
- generating a displacement of the displaceable supports (1.2.1) of the displacement module (1.2) from a second position (b) to a first position (a) such that there are displaceable supports (1.2.1) left available for supporting a new solar panel (2);
as long as there are solar panels (2) and enough space in the containing space (1.1) for storing solar panels (2) in the displaceable supports (1.2.1).

15. The method according to claim 9, wherein the loading of the device with a plurality of panels (2) stacked in the containing space (1.1) for a device with a front access opening according to the longitudinal forward movement direction is carried out by inserting the solar panels (2) until each solar panel (2) is supported on the corresponding displaceable supports (1.2.1) in the stack, preferably one at a time and in the order established by the stack.

## Patentansprüche

1. Lager- und Montagevorrichtung zum Lagern und Montieren von Solarpanels (2), umfassend:
- eine Stützstruktur (1) mit einem Aufnahmeraum (1.1) zum Lagern einer Mehrzahl an Solarpanels (2) und wobei sich die Stützstruktur (1) in ihrer Betriebsposition auf einer Basis (B) befindet, die im unteren Teil angeordnet ist; **dadurch gekennzeichnet, dass** sie ferner umfasst:
- ein oder mehrere Verlagerungsmodule (1.2), wobei jedes Verlagerungsmodul (1.2) eine oder mehrere verlagerbare Stützen (1.2.1) pro zu lagerndem Solarpanel (2) zum Stützen und Verlagern des Solarpanels (2) umfasst, wobei die eine oder die mehreren Stützen (1.2.1) von einer ersten Lagerposition (a) zu einer zweiten Freigabeposition (b) des Solarpanels (2) verlagert werden;
- einen Aktuator (1.3) zum Antreiben der Verlagerung der verlagerbaren Stützen (1.2.1);
wobei, wenn sich die verlagerbaren Stützen (1.2.1) in der ersten Position (a) befinden, das Verlagerungsmodul oder die Verlagerungsmodule (1.2) eine Position der von ihnen gestützten Solarpanels (2) in einer gestapelten Anordnung bestimmen, und
die Freigabe der Solarpanels (2) durch eine Öffnung in der Basis (B) erfolgt.

2. Vorrichtung nach Anspruch 1, wobei das Verlagerungsmodul (1.2) zwei Förderbänder (1.2.2) umfasst:
- jedes der beiden Förderbänder (1.2.2) eine lineare Konfiguration aufweist;
- jedes der beiden Förderbänder (1.2.2) sich zwischen zwei rotierenden Rädern (1.2.2.1) erstreckt; und
wobei die zwei Förderbänder (1.2.2) parallel und eines auf jeder Seite des Stapels von Solarpanels (2) angeordnet sind, wenn sie im Betriebsmodus gelagert sind, so dass:
- in der ersten Position (a) die verlagerbaren Stützen (1.2.1) zum Stützen eines Solarpanels (2) beider Förderbänder (1.2.2) einander zugewandt angeordnet sind; und
- in der zweiten Position (b) die verlagerbaren Stützen (1.2.1) zum Stützen eines Solarpanels (2) beider Förderbänder (1.2.2) gegenüberliegend angeordnet sind, d. h. auf der Seite des Förderbandes (1.2.2) gegenüber dem Stapel.

3. Vorrichtung nach Anspruch 2, wobei die Förderbänder (1.2.2) in einer Position senkrecht zur Basis (B) angeordnet sind, um die Panels durch die Öffnung der Basis (B) freizugeben, um die verlagerbaren Stützen (1.2.1) mit einer Bewegung senkrecht zur Basis (B) während der Freigabe eines Solarpanels (2) bereitzustellen.

4. Vorrichtung nach Anspruch 1, wobei das Verlagerungsmodul (1.2) zwei Stangenelemente (1.2.3) umfasst, die parallel und eines auf jeder Seite des Stapels von Solarpanels (2) angeordnete sind, wenn sie im Betriebsmodus gelagert sind, wobei jedes Stangenelement (1.2.3) ein erstes rotierendes Stangenelement (1.2.3.1) und ein zweites rotierendes und axial verlagerbares Stangenelement (1.2.3.2) umfasst, wobei die Elemente (1.2.3.1, 1.2.3.2) parallel zueinander sind, so dass es verlagerbare Stützen (1.2.1) gibt, die äquidistant zueinander entlang des ersten Stangenelements (1.2.3.1) verteilt sind, eine verlagerbare Stütze (1.2.1) für jedes zu lagernde Solarpanel (2) im Stapel und verlagerbare Stützen (1.2.1), die äquidistant zueinander und mit dem gleichen Abstand wie beim ersten Stangenelement (1.2.3) entlang des zweiten Stangenelements (1.2.3) verteilt sind, eine verlagerbare Stütze (1.2.1) für jedes zu lagernde Solarpanel (2) im Stapel mit Ausnahme des Untersten, das der Basis (B) am nächsten ist;
wobei
- in einer ersten Winkelposition des ersten Stangenelements (1.2.3.1) sich die verlagerbaren Stützen (1.2.1) des ersten Stangenelements (1.2.3.1) in der ersten Position (a) befinden und mittels Rotation in einer zweiten Winkelposition des ersten Stangenelements (1.2.3.1) sich die verlagerbaren Stützen (1.2.1) in der zweiten Position (b) befinden und
- in einer ersten Winkelposition des zweiten Stangenelements (1.2.3.2) sich die verlagerbaren Stützen (1.2.1) des zweiten Stangenelements (1.2.3.2) in der ersten Position (a) befinden und mittels Rotation in einer zweiten Winkelposition des zweiten Stangenelements (1.2.3.2) sich die verlagerbaren Stützen (1.2.1) in der zweiten Position (b) befinden,
wobei die Rotationen des ersten Stangenelements (1.2.3.1) und die Rotationen des zweiten Stangenelements (1.2.3.2) unabhängig voneinander sind.

5. Vorrichtung nach Anspruch 1, wobei das Verlagerungsmodul (1.2) zwei Schneckenräder (1.2.4) umfasst, die parallel und eines auf jeder Seite des Stapels von Solarpanels (2) angeordnet sind, wenn sie im Betriebsmodus gelagert sind, wobei jedes Schneckenrad (1.2.4) umfasst:
- einen Gewindebolzen (1.2.4.1), der sich entlang einer bestimmten Länge senkrecht zur Basis (B) erstreckt, und eine Gewindebuchse (1.2.4.2), wobei der Gewindebolzen (1.2.4.1) in die Buchse (1.2.4.2) eingeschraubt ist, so dass die Rotation des Bolzens (1.2.4.1) eine axiale Verlagerung der Buchse entlang des Bolzens (1.2.4.1) verursacht;
- eine Mehrzahl verlagerbarer Stützen (1.2.1), die entlang der Buchse (1.2.4.2) verteilt sind und im Betriebsmodus zum Stapel der Solarpanels (2) zeigen.

6. Vorrichtung nach einem der vorhergehenden Ansprüche, wobei der Abstand zwischen den Verlagerungsmodulen (1.2), die sich auf beiden Seiten des Stapels von Solarpanels (2), die im Betriebsmodus gelagert sind, befinden, gemäß der Breite der Solarpanels (2) einstellbar ist.

7. Vorrichtung nach einem der vorhergehenden Ansprüche, zusätzlich umfassend eine Transportstruktur (3) zur Verlagerung der Lager- und Montagevorrichtung, umfassend ein Sicherungselement, das die Lager- und Montagevorrichtung an der Transportstruktur (3) befestigt, wobei die Basis (3) parallel zum Boden und vom Boden beabstandet positioniert ist.

8. Vorrichtung nach dem vorhergehenden Anspruch, wobei die Transportstruktur (3) horizontale Verlagerungsmittel (3.1) zum Verlagern entlang des Bodens umfasst; und vertikale Verlagerungsmittel (3.2) zum Bewegen der Lager- und Montagevorrichtung näher an den Boden/weiter vom Boden weg.

9. Verfahren zum Platzieren von Solarpanels (2) mittels einer Vorrichtung nach einem der vorhergehenden Ansprüche, wobei das Verfahren umfasst:
- Laden der Vorrichtung mit einer Mehrzahl an Panels (2), die im Aufnahmeraum (1.1) gestapelt sind und auf den in der ersten Position (a) positionierten verlagerbaren Stützen (1.2.1) gestützt sind; und
Durchführen der folgenden Schritte in einer iterativen Weise:
i. Verlagern der Vorrichtung in einer Längsrichtung mit Vorwärtsbewegung, bis die Öffnung der Basis (B), parallel zum Boden, über einer Stütze für ein Solarpanel (2) angeordnet ist, die zuvor auf ihrem Fundament befestigt wurde und auf der ein Solarpanel (2) installiert wird;
ii. Erzeugen einer Verlagerung der verlagerbaren Stützen (1.2.1) des Verlagerungsmoduls (1.2) bis zum Loslassen des im unteren Teil des Stapels angeordneten Solarpanels (2);
solange im Behälter (1.1) Solarpanels (2) gelagert sind und Stützen für ein Solarpanel (2) verfügbar sind.

10. Verfahren nach Anspruch 9 mittels einer Vorrichtung nach einem der Ansprüche 1 bis 3, wobei Schritt ii) eines Verlagerns der Stützen (1.2.1) des Verlagerungsmoduls (1.2) bis zum Loslassen des im unteren Teil des Stapels angeordneten Solarpanels (2) mittels des Aktuators (1.3) ausgeführt wird, der die Rotation der rotierenden Räder (1.2.2.1) bewirkt, um die verlagerbaren Stützen (1.2.1) entlang des Bandes zu verlagern, wo sich diese Stützen (1.2.1) befinden.

11. Verfahren nach Anspruch 9 mittels einer Vorrichtung nach Anspruch 4, wobei Schritt ii) eines Verlagerns der verlagerbaren Stützen (1.2.1) des Verlagerungsmoduls (1.2) bis zum Loslassen des im unteren Teil des Stapels angeordneten Solarpanels (2) mittels des Aktuators (1.3) durchgeführt wird, der folgende Sequenz von Bewegungen ausgehend von einer Ausrichtung der Stangenelemente (1.2.3) so bewirkt, dass sich die verlagerbaren Stützen (1.2.1) in der ersten Winkelposition (a) befinden:
1) Senken der Vorrichtung, sie näher an den Boden bewegen, bis das im unteren Teil des Stapels angeordnete Solarpanel (2) mit der Solarpanel-Stütze in Kontakt kommt und nicht mehr auf die entsprechenden verlagerbaren Stützen (1.2.1) gestützt ist;
2) Rotieren des ersten Stangenelements (1.2.3.1) in die zweite Winkelposition (b);
3) Senken des zweiten Stangenelements (1.2.3.2) gemäß seiner Längsrichtung um einen Abstand, der der Trennung zwischen zwei aufeinanderfolgenden verlagerbaren Stützen (1.2.1) entspricht, Senken des Stapels von Solarpanels (2);
4) Rotieren des ersten Stangenelements (1.2.3.1) in die erste Winkelposition (a);
5) Rotieren des zweiten Stangenelements (1.2.3.2) in die zweite Winkelposition (b);
6) Heben des zweiten Stangenelements (1.2.3.2) gemäß seiner Längsrichtung um einen Abstand, der der Trennung zwischen zwei aufeinanderfolgenden verlagerbaren Stützen (1.2.1) entspricht;
7) Rotieren des zweiten Stangenelements (1.2.3.2) in die erste Winkelposition (a).

12. Verfahren nach Anspruch 9 mittels einer Vorrichtung nach Anspruch 5, wobei Schritt ii) eines Verlagerns der Stützen (1.2.1) des Verlagerungsmoduls (1.2) bis zum Loslassen des im unteren Teil des Stapels angeordneten Solarpanels (2) mittels des Aktuators (1.3) durchgeführt wird, der die Rotation des Gewindebolzens (1.2.4.1) bewirkt, der die Buchse (1.2.4.2) in Richtung Boden senkt, bis das Solarpanel (2), das im unteren Teil des Stapels angeordnet ist, auf der Stütze gestützt wird und nicht länger auf den entsprechenden verlagerbaren Stützen (1.2.1) gestützt wird.

13. Verfahren nach Anspruch 9, wobei das Laden der Vorrichtung mit einer Mehrzahl von Panels (2), die in dem Aufnahmeraum (1.1) gestapelt sind, gemäß den folgenden Schritten durchgeführt wird:
- Verteilen der Mehrzahl von Solarpanels (2) entlang einer bestimmten Länge; und Durchführen der folgenden Schritte in einer iterativen Weise:
- Verlagern der Vorrichtung bis die Öffnung der Basis (B) über einem Solarpanel (2) angeordnet ist, das entlang einer bestimmten Länge verteilt wurde;
- Erzeugen einer Verlagerung der Stützen (1.2.1) des Verlagerungsmoduls (1.2) von einer zweiten Position (b) zu einer ersten Position (a), so dass sich das Solarpanel (2), das sich in der Öffnung der Basis (B) befindet, im unteren Teil des Stapels im Aufnahmeraum (1.1) der Vorrichtung, die alle Solarpanels (2) des Stapels anhebt, befindet;
solange Solarpanels (2) über eine bestimmte Länge verteilt sind und genügend Platz im Aufnahmeraum (1.1) vorhanden ist, um Solarpanels (2) in den verlagerbaren Stützen (1.2.1) zu lagern.

14. Verfahren nach Anspruch 9, wobei das Laden der Vorrichtung mit einer Mehrzahl von Panels (2), die im Aufnahmeraum (1.1) für eine Vorrichtung mit einer oberen Zugangsöffnung zum Stapel gestapelt sind, in einer iterativen Weise gemäß den folgenden Schritten durchgeführt wird:
- Bereitstellen eines Solarpanels (2) durch den oberen Zugang zum Stapel, bis es auf den verlagerbaren Stützen (1.2.1) im oberen Teil des Stapels gestützt ist;
- Erzeugen einer Verlagerung der verlagerbaren Stützen (1.2.1) des Verlagerungsmoduls (1.2) von einer zweiten Position (b) zu einer ersten Position (a), so dass noch verlagerbare Stützen (1.2.1) zur Stützung eines neuen Solarpanels (2) vorhanden sind;
solange Solarpanels (2) vorhanden sind und im Aufnahmeraum (1.1) genügend Platz für eine Lagerung von Solarpanels (2) in den verlagerbaren Stützen (1.2.1) vorhanden ist.

15. Verfahren nach Anspruch 9, wobei das Laden der Vorrichtung mit einer Mehrzahl von Panels (2), die in dem Aufnahmeraum (1.1) für eine Vorrichtung mit einer vorderen Zugangsöffnung gemäß der Längsvorwärtsbewegungsrichtung gestapelt sind, durch Einsetzen der Solarpanels (2), bis jedes Solarpanel (2) auf den entsprechenden verlagerbaren Stützen (1.2.1) im Stapel gestützt ist, vorzugsweise einzeln und in der vom Stapel festgelegten Reihenfolge, durchgeführt wird.

## Revendications

1. Dispositif de stockage et d'assemblage pour stocker et assembler des panneaux solaires (2) comprenant :
- une structure de support (1) avec un espace de confinement (1.1) pour stocker une pluralité de panneaux solaires (2) et ladite structure de support (1) positionnée sur une base (B) agencée dans la partie inférieure dans sa position opérationnelle ; **caractérisé en ce qu'**il comprend en outre :
- un ou plusieurs modules de déplacement (1.2), dans lequel chaque module de déplacement (1.2) comprend un ou plusieurs supports déplaçables (1.2.1) par panneau solaire (2) à stocker pour le support et le déplacement du panneau solaire (2), dans lequel les un ou plusieurs supports (1.2.1) sont déplaçables d'une première position de stockage (a) à une seconde position de libération (b) du panneau solaire (2) ;
- un actionneur (1.3) pour entraîner le déplacement des supports déplaçables (1.2.1) ;
dans lequel lorsque les supports déplaçables (1.2.1) sont positionnés dans la première position (a), le module ou les modules de déplacement (1.2) déterminent une position des panneaux solaires (2) supportés par ces derniers dans un agencement empilé, et
la libération des panneaux solaires (2) a lieu par une ouverture dans la base (B).

2. Dispositif selon la revendication 1, dans lequel le module de déplacement (1.2) comprend deux courroies transporteuses (1.2.2) :
- chacune des deux courroies transporteuses (1.2.2) a une configuration linéaire ;
- chacune des deux courroies transporteuses (1.2.2) s'étend entre deux roues rotatives (1.2.2.1) ; et
dans lequel les deux courroies transporteuses (1.2.2) sont agencées parallèlement et une de chaque côté de la pile de panneaux solaires (2) lorsqu'elles sont stockées dans le mode opérationnel de sorte que :
- dans la première position (a), les supports déplaçables (1.2.1) pour supporter un panneau solaire (2) des deux courroies transporteuses (1.2.2) sont agencés l'un en face de l'autre ; et
- dans la seconde position (b), les supports déplaçables (1.2.1) pour supporter un panneau solaire (2) des deux courroies transporteuses (1.2.2) sont agencés en opposition, c'est-à-dire sur le côté de la courroie transporteuse (1.2.2) opposé à la pile.

3. Dispositif selon la revendication 2, dans lequel les courroies transporteuses (1.2.2) sont agencées dans une position perpendiculaire à la base (B) pour libérer les panneaux par l'ouverture de la base (B) afin de doter les supports déplaçables (1.2.1) d'un mouvement perpendiculaire à la base (B) pendant la libération d'un panneau solaire (2).

4. Dispositif selon la revendication 1, dans lequel le module de déplacement (1.2) comprend deux éléments de barre (1.2.3) agencés parallèlement et un de chaque côté de la pile de panneaux solaires (2) lorsqu'ils sont stockés dans le mode opérationnel, chaque élément de barre (1.2.3) comprenant un premier élément de barre rotatif (1.2.3.1) et un second élément de barre rotatif et axialement déplaçable (1.2.3.2), lesdits éléments (1.2.3.1, 1.2.3.2) étant parallèles entre eux, de sorte qu'il y a des supports déplaçables (1.2.1) répartis à égale distance les uns par rapport aux autres le long du premier élément de barre (1.2.3.1), un support déplaçable (1.2.1) pour chaque panneau solaire (2) à stocker dans la pile, et des supports déplaçables (1.2.1) répartis à égale distance les uns par rapport aux autres, et avec la même distance de séparation que dans le premier élément de barre (1.2.3), le long du second élément de barre (1.2.3), un support déplaçable (1.2.1) pour chaque panneau solaire (2) à stocker dans la pile à l'exception du plus bas et du plus près de la base (B) ;
dans lequel :
- dans une première position angulaire du premier élément de barre (1.2.3.1), les supports déplaçables (1.2.1) dudit premier élément de barre (1.2.3.1) sont positionnés dans la première position (a), et au moyen de rotation, dans une seconde position angulaire du premier élément de barre (1.2.3.1), les supports déplaçables (1.2.1) sont positionnés dans la seconde position (b), et
- dans une première position angulaire du second élément de barre (1.2.3.2), les supports déplaçables (1.2.1) dudit second élément de barre (1.2.3.2) sont positionnés dans la première position (a), et au moyen de rotation, dans une seconde position angulaire du second élément de barre (1.2.3.2), les supports déplaçables (1.2.1) sont positionnés dans la seconde position (b),
les rotations du premier élément de barre (1.2.3.1) et les rotations du second élément de barre (1.2.3.2) étant indépendantes les unes des autres.

5. Dispositif selon la revendication 1, dans lequel le module de déplacement (1.2) comprend deux engrenages à vis sans fin (1.2.4) agencés parallèlement et l'un de chaque côté de la pile de panneaux solaires (2) lorsqu'ils sont stockés dans le mode opérationnel, chaque engrenage à vis sans fin (1.2.4) comprenant :
- un boulon fileté (1.2.4.1) étendu le long d'une certaine longueur perpendiculaire à la base (B) et une douille filetée (1.2.4.2), le boulon fileté (1.2.4.1) étant vissé dans la douille (1.2.4.2) de sorte que la rotation du boulon (1.2.4.1) provoque le déplacement axial de la douille le long du boulon (1.2.4.1) ;
- une pluralité de supports déplaçables (1.2.1) répartis le long de la douille (1.2.4.2) et orientés vers la pile de panneaux solaires (2) dans le mode opérationnel.

6. Dispositif selon l'une quelconque des revendications précédentes, dans lequel la distance entre les modules de déplacement (1.2) positionnés des deux côtés de la pile de panneaux solaires (2) stockés dans le mode opérationnel est ajustable selon la largeur des panneaux solaires (2).

7. Dispositif selon l'une quelconque des revendications précédentes, comprenant de plus, une structure de transport (3) pour le déplacement du dispositif de stockage et d'assemblage, comprenant un élément de fixation fixant le dispositif de stockage et d'assemblage à la structure de transport (3) avec la base (3) qui est positionnée parallèlement à et espacée du sol.

8. Dispositif selon la revendication précédente, dans lequel la structure de transport (3) comprend un moyen de déplacement horizontal (3.1) pour être déplacée le long du sol ; et un moyen de déplacement vertical (3.2) pour déplacer le dispositif de stockage et d'assemblage plus près et/ou plus loin du sol.

9. Procédé pour la mise en place de panneaux solaires (2) au moyen d'un dispositif selon l'une quelconque des revendications précédentes, dans lequel ledit procédé comprend les étapes suivantes :
- charger le dispositif avec une pluralité de panneaux (2) empilés dans l'espace de confinement (1.1) et supportés sur les supports déplaçables (1.2.1) positionnés dans la première position (a) ; et
d'une manière itérative, réaliser les étapes suivantes :
i. déplacer le dispositif dans une direction de mouvement longitudinale en avant jusqu'à situer l'ouverture de la base (B) parallèle au sol, au-dessus d'un support pour un panneau solaire (2) préalablement fixé sur sa fondation et sur lequel un panneau solaire (2) est installé ;
ii. générer un déplacement des supports déplaçables (1.2.1) du module de déplacement (1.2) jusqu'à libérer le panneau solaire (2) agencé dans la partie inférieure dans la pile ;
tant qu'il y a des panneaux solaires (2) stockés dans le conteneur (1.1) et que des supports pour un panneau solaire (2) sont disponibles.

10. Procédé selon la revendication 9 au moyen d'un dispositif selon l'une quelconque des revendications 1 à 3, dans lequel l'étape ii) pour déplacer les supports (1.2.1) du module de déplacement (1.2) jusqu'à libérer le panneau solaire (2) agencé dans la partie inférieure de la pile, est réalisée au moyen de l'actionneur (1.3) provoquant la rotation des roues rotatives (1.2.2.1) pour le déplacement des supports déplaçables (1.2.1) le long de la courroie où lesdits supports (1.2.1) sont positionnés.

11. Procédé selon la revendication 9 au moyen d'un dispositif selon la revendication 4, dans lequel l'étape ii) pour déplacer les supports déplaçables (1.2.1) du module de déplacement (1.2) jusqu'à libérer le panneau solaire (2) agencé dans la partie inférieure dans la pile, est réalisée au moyen de l'actionneur (1.3) provoquant la séquence de mouvements suivants, à partir d'une orientation des éléments de barre (1.2.3) de sorte que les supports déplaçables (1.2.1) sont dans la première position angulaire (a) :
1) abaisser le dispositif, le rapprocher du sol, jusqu'à ce que le panneau solaire (2) agencé dans la partie inférieure dans la pile vienne en contact avec le support de panneau solaire, n'étant plus supporté sur les supports déplaçables (1.2.1) correspondants ;
2) faire tourner le premier élément de barre (1.2.3.1) dans la seconde position angulaire (b) ;
3) abaisser le second élément de barre (1.2.3.2) selon sa direction longitudinale sur une distance qui est équivalente à la séparation entre deux supports déplaçables (1.2.1) consécutifs, abaissant la pile de panneaux solaires (2) ;
4) faire tourner le premier élément de barre (1.2.3.1) dans la première position angulaire (a) ;
5) faire tourner le second élément de barre (1.2.3.2) dans la seconde position angulaire (b) ;
6) lever le second élément de barre (1.2.3.2) selon sa direction longitudinale, sur une distance qui est équivalente à la séparation entre deux supports déplaçables (1.2.1) consécutifs ;
7) faire tourner le second élément de barre (1.2.3.2) dans la première position angulaire (a).

12. Procédé selon la revendication 9 au moyen d'un dispositif selon la revendication 5, dans lequel l'étape ii) pour déplacer les supports (1.2.1) du module de déplacement (1.2) jusqu'à la libération du panneau solaire (2) agencé dans la partie inférieure dans la pile, est réalisée au moyen de l'actionneur (1.3) provoquant la rotation du boulon fileté (1.2.4.1) abaissant la douille (1.2.4.2) vers le sol jusqu'à ce que le panneau solaire (2) agencé dans la partie inférieure dans la pile, soit supporté sur le support et ne soit plus supporté sur les supports déplaçables (1.2.1) correspondants.

13. Procédé selon la revendication 9, dans lequel le chargement du dispositif avec une pluralité de panneaux (2) empilés dans l'espace de confinement (1.1) est réalisé selon les étapes suivantes :
- répartir la pluralité de panneaux solaires (2) le long d'une certaine longueur ; et
d'une manière itérative, réaliser les étapes suivantes :
- déplacer le dispositif jusqu'à situer l'ouverture de la base (B) au-dessus d'un panneau solaire (2) réparti préalablement le long d'une certaine longueur;
- générer un déplacement des supports (1.2.1) du module de déplacement (1.2) d'une seconde position (b) à une première position (a) de sorte que le panneau solaire (2) positionné dans l'ouverture de la base (B) est situé dans la partie inférieure de la pile dans l'espace de confinement (1.1) du dispositif, levant tous les panneaux solaires (2) de la pile ;
tant qu'il y a des panneaux solaires (2) répartis le long d'une certaine longueur et assez d'espace dans l'espace de confinement (1.1) pour stocker des panneaux solaires (2) dans les supports déplaçables (1.2.1).

14. Procédé selon la revendication 9, dans lequel le chargement du dispositif avec une pluralité de panneaux (2) empilés dans l'espace de confinement (1.1) pour un dispositif avec une ouverture d'accès supérieure à la pile, est réalisé, d'une manière itérative, selon les étapes suivantes :
- prévoir un panneau solaire (2) à travers l'accès supérieur à la pile jusqu'à ce qu'il soit supporté sur les supports déplaçables (1.2.1) dans la partie supérieure de la pile ;
- générer un déplacement des supports déplaçables (1.2.1) du module de déplacement (1.2) d'une seconde position (b) à une première position (a) de sorte qu'il y a des supports déplaçables (1.2.1) disponibles pour supporter un nouveau panneau solaire (2) ;
tant qu'il y a des panneaux solaires (2) et assez d'espace dans l'espace de confinement (1.1) pour stocker des panneaux solaires (2) dans les supports déplaçables (1.2.1).

15. Procédé selon la revendication 9, dans lequel le chargement du dispositif avec une pluralité de panneaux (2) empilés dans l'espace de confinement (1.1) pour un dispositif avec une ouverture d'accès avant selon la direction de mouvement longitudinale en avant, est réalisé en insérant les panneaux solaires (2) jusqu'à ce que chaque panneau solaire (2) soit supporté sur les supports déplaçables (1.2.1) correspondants dans la pile, de préférence un à la fois et dans l'ordre établi par la pile.
